# EUROPÄISCHE PATENTSCHRIFT

(11) **EP 1 507 982 B1**
(45) Veröffentlichungstag und Bekanntmachung des Hinweises auf die Patenterteilung: **07.12.2005**
(21) Anmeldenummer: 03735316.6
(22) Anmeldetag: 21.05.2003
(51) Int. Cl.: F16B 13/00, F16B 13/06, F16B 23/00

(54) **SCHWERLASTDÜBEL**
HEAVY DUTY DOWEL
CHEVILLE A HAUTE RESISTANCE

(30) Priorität: 24.05.2002 DE 10224144; 18.07.2002 DE 10233287
(43) Veröffentlichungstag der Anmeldung: 23.02.2005
(73) Patentinhaber: Heying, Gerhard, 13591 Berlin (DE)
(72) Erfinder: Heying, Gerhard, 13591 Berlin (DE)
(74) Vertreter: Hengelhaupt, Jürgen
(86) Internationale Anmeldenummer: PCT/DE2003/001690
(87) Internationale Veröffentlichungsnummer: WO 2003/100269

(56) Entgegenhaltungen:
- EP-A- 0 105 829
- DE-A- 2 046 341
- DE-A- 2 925 603
- US-A- 1 417 209
- US-A- 4 020 735
- US-A- 4 027 572
- US-A- 5 161 916
- US-A- 5 637 158

## Beschreibung

Die Erfindung bezieht sich auf einen Schwerlastdübel mit einem hülsenförmigen, von einer Gewindestange axial durchsetzten Dübelkörper, mit einem im-Bereich der Dübelspitze stirnseitig angeordneten und den Dübelkörper aufweitenden, mit der Gewindestange verbundenen Spreizkörper und mit einem mit der Gewindestange verbundenen Widerlagerkörper, dem gegenüber der Spreizkörper durch Verdrehen der Gewindestange axial im Dübelkörper verschiebbar ist.

Bei einem beispielsweise aus der DE-OS 2046 341 bekannten Schwerlastdübel dieser Art ist der hülsenförmige Dübelkörper aus drei aus Stahlblech bestehenden Lamellen segmentartig zusammengesetzt, die ihrerseits durch Spannglieder zusammengehalten werden. Auf einer diesen Hülsenkörper durchsetzenden Gewindestange ist in dem der Dübelspitze zugewandten Bereich ein konischer Spreizkörper aufgeschraubt, der mit einem ebenfalls konisch ausgeführten Widerlagerkörper zusammenwirkt. Der Widerlagerkörper ist während der Montage des Schwerlastdübels im wesentlichen ortsfest mit der Gewindestange verbunden, so dass sich bei einem Verdrehen der Gewindestange eine Relativbewegung zwischen dem Spreizkörper und dem Widerlagerkörper ergibt. Sofern das Gewinde der Gewindestange ein Rechtsgewinde ist, wird bei einem Verdrehen der Gewindestange im Uhrzeigersinn eine Spreizung des Dübelkörpers und damit eine Pressung an das ihn aufnehmende Bohrloch bewirkt, die eine Übertragung von Zug-, Druck- und Querkräften über den Schwerlastdübel ermöglicht.

Bei mehrschaligen Wand-, Boden- und Deckenkonstruktionen, bei denen entweder aus akustischen oder aus wärmetechnischen Gründen ein Masse-Feder-Masse-System oder eine aus einer tragenden Wand-, Boden- oder Deckenplatte mit vorgesetzter Dämmschicht und einer weiteren nicht tragenden Hartschale bestehender Baukörper vorliegt, besteht das Problem, sowohl bei Altbauten für erforderliche Nachrüstungen als auch bei Neubauten mittels Schwerlastdübeln, die in den tragenden Platten zu verankern sind, die nichttragenden Bauteilschichten zu überbrücken und sicher Zug-, Druck- und Querkräfte von Anbauteilen, wie z.B. Balkonen, technischen Geräten, Gerüsten oder dergl. auf die tragende Platte zu übertragen. Für derartige Lastaufnahme- bzw. -übertragungsprobleme ist jedoch der aus der DE-OS 20 46 341 bekannte Schwerlastdübel nicht geeignet, weil zum einen den Einzellamellen die notwendige Stabilität als Tragorgan fehlt und zum andern die nicht tragende Hartschale in ungünstiger Weise mit der gleichen, das gemeinsame Bohrloch pressenden Kraft belastet wird. Gibt beispielsweise die nicht tragende Hartschale, eine Fassadenplatte oder dergl., dieser Presskraft nach, wird die Dübelverbindung unsicher oder sogar insgesamt gelöst.

Davon ausgehend liegt der Erfindung die Aufgabe zugrunde, einen Schwerlastdübel der eingangs genannten Art anzugeben, mit dem hohe Quer-, Zug- und Druckkräfte von einem Bauteil mit vorgesetzten nicht tragenden Bauteilschichten auf Anbauteile, wie Balkone, technische Geräte, Gerüste oder dergl., dauerhaft sicher übertragen werden können.

Nach der Erfindung wird dies dadurch gelöst, dass der Dübelkörper als einteiliges Rohr ausgebildet ist und auf der der Dübelspitze abgewandten Stirnseite den Widerlagerkörper aufnimmt und dass der Widerlagerkörper an seiner ersten äußeren Stirnseite mit zum Eingriff eines Werkzeuges zur Verdrehsicherung während der Montage bestimmten Ausformungen versehen ist.

Durch die Ausbildung des Dübelkörpers als einteiliges Rohr ist der Schwerlastdübel mit einem dem Bohrloch entsprechend angepassten Außendurchmesser in der Lage, planbaren Quer- und sogar Knickkräften standzuhalten und damit gleichzeitig nicht tragende Bauteile, wie Dämmschichten und Vorsatzschalen oder Fassadenplatten unbelastet zu überbrücken. Die Ausbildung als einteiliges Rohr macht nur eine Verankerung der der Dübelspitze nahen Stirnseite durch Aufweiten mit Verformung der Rohrstirnseite möglich, so dass sich eine wirksame Hinterschnittverankerung im tragenden Bauteil ergibt. Um die geforderten vom Rohr zu übertragenden Quer-, Zug- und Druckkräfte sicher zu gewährleisten, kann das dem Rohr auf der der Dübelspitze abgewandten Seite zugeordnete Widerlager mittels seiner Ausformungen zur Lagesicherung auch des Rohres während der Montage verdrehsicher fixiert werden. Nach erfolgter Montage ist der Schwerlastdübel durch Anwendung des Erfindungsgedankens auch verdrehungssteif im tragenden Bauteil verankert.

Üblicherweise werden derartige Schwerlastdübel mittels ortsfest montierbarer Bohr- und Setzvorrichtungen eingebaut, wobei zunächst alle Schalen bzw. Schichten bis zum tragenden Bauteil hinein gemeinsam verbohrt werden, danach die Bohrrückstände entfernt werden und der Dübel gesetzt wird. Die erfindungsgemäße Bauform des Schwerlastdübels reduziert gegenüber den bekannten Bauformen den Zeitaufwand bei der Montage beträchtlich.

In Weiterbildung des Erfindungsgedankens ist vorteilhaft vorgesehen, dass die Ausformungen von mindestens zwei im Abstand von der Gewindestange im Widerlagerkörper vorgesehenen Ausnehmungen gebildet sind. Diese können mit Vorteil von Sacklochbohrungen gebildet sein. Es ist aber ebenso möglich, Schlitze oder Nuten vorzusehen, die beispielsweise an der freien Stirnseite des Widerlagerkörpers radial verlaufend angeordnet sind.

Bei einer ersten Ausführungsform des erfindungsgemäßen Schwerlastdübels ist der Widerlagerkörper rotationssymmetrisch ausgebildet und zumindest teilweise mit einem Außendurchmesser versehen, der dem Innendurchmesser des Rohres entspricht. Eine andere Alternative ergibt sich, wenn sich an den Bereich des Außendurchmessers ein vorstehender, der Wandstärke des Rohres angepasster Kragen anschließt. Eine weitere vorteilhafte Alternative besteht darin, dass sich an den Bereich des Außendurchmessers ein sich verjüngender Konus anschließt.

Es ist aber auch vorteilhaft möglich, diese beiden Alternativen zu kombinieren, derart, dass der Widerlagerkörper in seiner axialen Erstreckung auf einem ersten Teil zylindrisch mit einem dem Innendurchmesser des Rohres angepassten Außendurchmesser, auf einem zweiten Teil mit einem zylindrischen Kragen mit einem dem Außendurchmesser des Rohres angepassten Außendurchmesser und auf einem dritten Teil mit einem Konus versehen ist, dessen kleinster Durchmesser dem Rohr-Innendurchmesser und dessen größter Durchmesser dem Rohr-Außendurchmesser angepasst ist.

Hierbei wird zweckmäßig vorgesehen, dass der Widerlagerkörper an seiner zweiten Stirnseite mit zum Eingriff eines Werkzeuges zur Verdrehsicherung während der Montage bestimmten Ausformungen versehen ist, die denen auf der ersten Stirnseite entsprechen.

In allen vorgenannten Ausbildungsformen des Widerlagerkörpers ist vorteilhaft vorgesehen, dass der Widerlagerkörper die Gewindestange mit einer in Axialrichtung durchgehenden Bohrung umschließt. Die Bohrung kann dabei zentrisch angeordnet sein oder aber auch parallel zur Achse des Widerlagerkörpers exzentrisch angeordnet sein.

In beiden Fällen ergibt sich ein konstruktiver und montagetechnischer Vorteil, wenn die Bohrung eine Gewindebohrung ist, die mit dem Gewinde der Gewindestange korrespondiert. Vorteilhaft ist dieses Gewinde ein Linksgewinde.

Zur Begünstigung der Aufweitung des einteiligen Rohres ist dieses zumindest auf der der Dübelspitze zugewandten Seite mit besonderem Vorzug mit mindestens drei mantellinienparallelen, regelmäßig über den Umfang des Rohres verteilt angeordneten Schlitzen versehen.

Auf der der Dübelseite abgewandten Seite ist vorzugsweise das einteilige Rohr mit zwei mantellinienparallelen, unsymmetrisch über den Umfang des Rohres angeordneten Schlitzen versehen. Es ist aber auch möglich, eine ähnliche Aufweitungswirkung zu erzielen, wenn das einteilige Rohr auf der der Dübelspitze abgewandten Seite mit mehreren nur etwa über den halben Umfang des Rohres verteilten Schlitzen ausgestattet ist.

Bezüglich der Montage des Schwerlastdübels ergibt sich ein wesentlicher Vorteil, wenn die Gewindestange mit zwei entgegengesetzt verlaufenden Gewinden (Rechts-/Linksgewinde) versehen ist, von denen eines je einer der Stirnseiten des einteiligen Rohres zugeordnet ist.

Zur Erleichterung der manuellen oder maschinellen Montage des Schwerlastdübels ist die Gewindestange am freien Ende ihrer der Dübelspitze abgewandten Seite mit zum Eingriff eines Werkzeuges zum drehmomentenschlüssigen Verdrehen während der Montage bestimmten Ausformung ausgestattet. Diese kann z.B. ein Sechskantkopf für einen Ring- oder Gabelschlüssel bzw. eine Nuss oder eine zum Eingriff eines Inbusschlüssels bestimmte Ausnehmung sein.

Zur Erleichterung der Montage mit einer Dübelsetzmaschine kann das einteilige Rohr mantelaußenseitig zumindest teilweise mit einer aufgerauten Oberfläche versehen sein.

Eine die Standzeit des erfindungsgemäßen Schwerlastdübels verlängernde Ausbildungsform ergibt sich, wenn das Rohr, der Spreizkörper, der Widerlagerkörper und die Gewindestange aus einem korrosionsbeständigen Material bestehen. Hierbei kann als korrosionsbeständiges Material ein nichtrostender, hochfester Stahl vorgesehen sein, z.B. ein Chrom-Nickel-Stahl-Werkstoff.

Weitere Einzelheiten und Vorteile der erfindungsgemäßen Ausführungsform eines Schwerlastdübels sind anhand der Zeichnung beschrieben und deren Wirkungsweise erläutert.
In Fig. 1 ist ein erfindungsgemäßer Schwerlastdübel im Schnitt innerhalb einer mehrschaligen Wand schematisch dargestellt.
Die Fig. 2 zeigt in einer ersten Ausführungsform schematisch im Schnitt einen erfindungsgemäßen Schwerlastdübel in einer vergrößerten Darstellung.
Die Fig. 3 zeigt schematisch als Einzelheit den Widerlagerkörper aus Fig.2 in einer Draufsicht.
In Fig. 4 ist eine zweite, etwas andere Ausführungsform des erfindungsgemäßen Schwerlastdübels zum Teil im Schnitt schematisch vergrößert dargestellt.
In Fig. 5 ist schematisch als Einzelheit der Widerlagerkörper nach Fig.4 in einer Ansicht gezeichnet.
Die Fig. 6 zeigt eine Längsansicht eines weiteren Widerlagerkörpers schematisch in vergrößerter Darstellung.
In den Figuren 7 und 8 sind zwei Schnitte VII - VII und VIII - VIII des einteiligen Rohres aus Fig. 2 schematisch dargestellt.

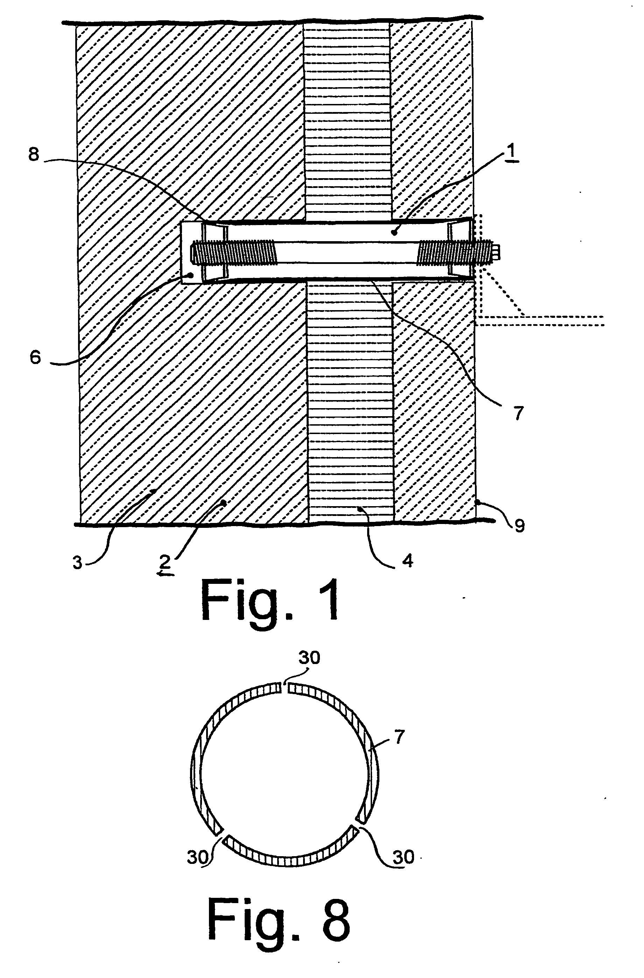

Der Schwerlastdübel nach der Erfindung ist entsprechend der Darstellung in Fig. 1 in ein Wandsystem 2 eingebaut, das beispielsweise aus einer tragenden Betonplatte 3, einer Wärmedämmschicht 4 und einer vorgesetzten, aus Leichtbeton gefertigten Fassadenplatte 5 besteht. Der Schwerlastdübel 1 sitzt in einem Bohrloch 6, das in einem Arbeitsgang mit einer Bohrkrone im Nass- oder Trockenverfahren hergestellt ist, wobei alle Teile 3 bis 5 des Wandsystems 2 gemeinsam verbohrt sind. Ersichtlich hat der Schwerlastdübel 1 einen als einteiliges Rohr 7 ausgebildeten Dübelkörper, dessen Dübelspitze 8 in das Bohrloch 6 der Betonplatte 3 tief hineinreicht und dort verankert ist. Das einteilige Rohr 7 ragt durch den von der Wärmedämmschicht 4 ausgefüllten Zwischenraum zwischen der betonplatte 3 und der fassadenplatte 5 bis zur äußeren Oberfläche 9 dieser fassadenplatte 5 hindurch und überbrückt sie. Wie die Fig.1 zeigt, stellt das einteilige Rohr 7 einen aus einem durchgehenden Rohrquerschnitt mit planbarer Belastung für Zug-, Druck-, Quer- und Knickkräfte bestehenden Metallträger dar, der z.B. aus einem nichtrostenden Stahl, insbesondere einem Chrom-Nickel-Stahl-Werkstoff gefertigt werden kann.

An dem Rohr 7 können, wie sich der Fig.1 entnehmen lässt, bedarfsweise Halte- oder Tragorgane von Anbauten, wie Balkonen, Gerüsten, technischen Geräten oder dergl. befestigt werden. Dies ist mit einem anschraubbaren Winkelstück 10 dargestellt.

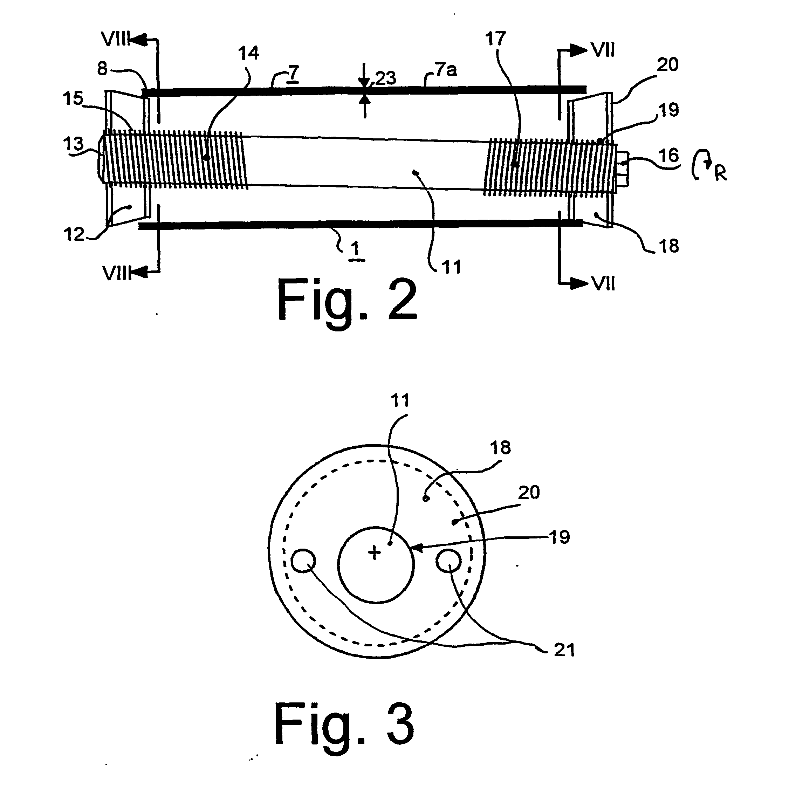

Der in Fig. 2 in einem Längsschnitt dargestellte Schwerlastdübel 1 hat einen aus dem einteiligen Rohr 7 gebildeten hülsenförmigen Dübelkörper 7a, der von einer Gewindestange 11 axial durchsetzt ist. Im Bereich der Dübelspitze 8 ist ein Spreizkörper 12 stirnseitig angeordnet, der zur Aufweitung des Rohres 7 bestimmt ist. Der Spreizkörper 12 ist mit der Gewindestange 11 verbunden; im dargestellten Ausführungsbeispiel ist die Gewindestange 11 an ihrem der Dübelspitze 8 zugeordneten Ende mit einem Rechtsgewinde 14 versehen, in das ein z.B. zentrisch im Spreizkörper 12 angeordnetes Gewindeloch 15 eingreift. Bei einem Verdrehen der Gewindestange 11 im Uhrzeigersinn am freien Ende 16 (Pfeilrichtung R) wird der Spreizkörper 12 auf das freie Ende 16 axial zu bewegt. Um die erforderliche Spreizkraft aufzubringen, ist im Bereich des freien Endes 16 ein Linksgewinde 17 in die Gewindestange 11 eingeformt, in das ein Widerlagerköroper 18 eingreift. Der Widerlagerkörper 18 ist im dargestellten Ausführungsbeispiel gegenüber dem Spreizkörper 12 durch Verdrehen der Gewindestange 11 axial im Dübelkörper verschiebbar: wird die Gewindestange 11 am freien Ende 16 im Uhrzeigersinn verdreht, bewegen sich Widerlagerkörper 18 und Spreizkörper 12 aufeinander zu. Ersichtlich ist auch der Widerlagerkörper 18 hierbei als spreizendes Teil ausgebildet.

Die Gewindestange 11 verläuft bei dem in Fig. 2 dargestellten Ausführungsbeispiel unter einem kleinen Winkel geneigt zur Längsachse des Rohres 7, der sich aus der exzentrisch im Widerlagerkörper 18 angeordneten Gewindebohrung 19 für das Linksgewinde 17 ergibt. Der Widerlagerkörper 18 ist auf seiner ersten Stirnseite 20 mit Ausformungen 21 versehen, die im Abstand von der Gewindestange 11 und der Gewindebohrung 19 angeordnete Ausnehmungen sind, welche ihrerseits von Sacklochbohrungen gebildet sind. Diese Sacklochbohrungen sind zum Eingriff eines Werkzeuges zur Verdrehsicherung während der Montage bestimmt, wobei vorteilhaft das freie Ende 16 der Gewindestange 11 frei bleibt.

Der Widerlagerkörper 18 ist - wie die Fig. 2 und 3 zeigen - rotationssymmetrisch ausgebildet und zumindest teilweise mit einem Außendurchmesser versehen, der dem Innendurchmesser des Rohres 7 entspricht. Die Außenkontur des Widerlagerkörpers verläuft, ähnlich wie die des Spreizkörpers 12, konisch.

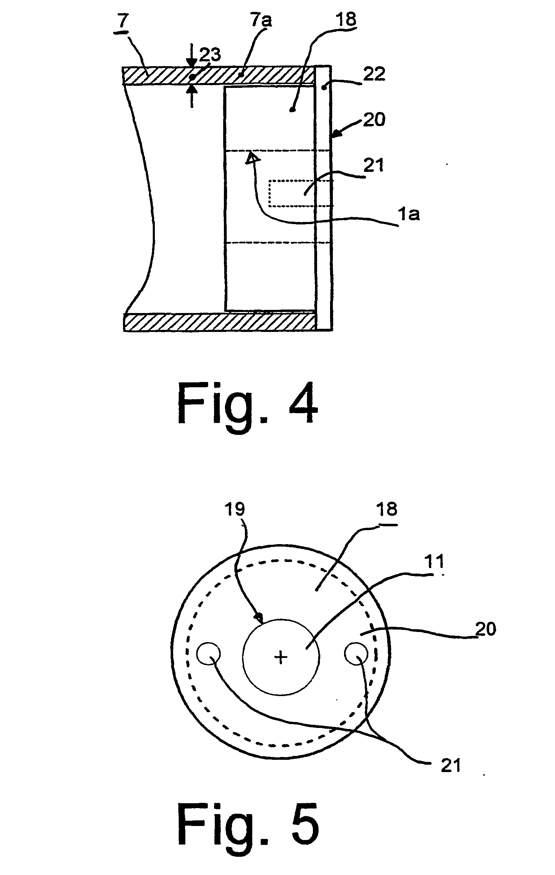

Die Kontur kann aber auch im wesentlichen zylindrisch sein, wie das Ausführungsbeispiel nach den Fig. 4 und 5 zeigt, in denen gleiche Teile mit gleichen Bezugszeichen versehen sind. Der Widerlagerkörper 18 hat dabei einen vorstehenden Kragen 22, der der Wandstärke 23 des Rohres 7 angepasst ist.

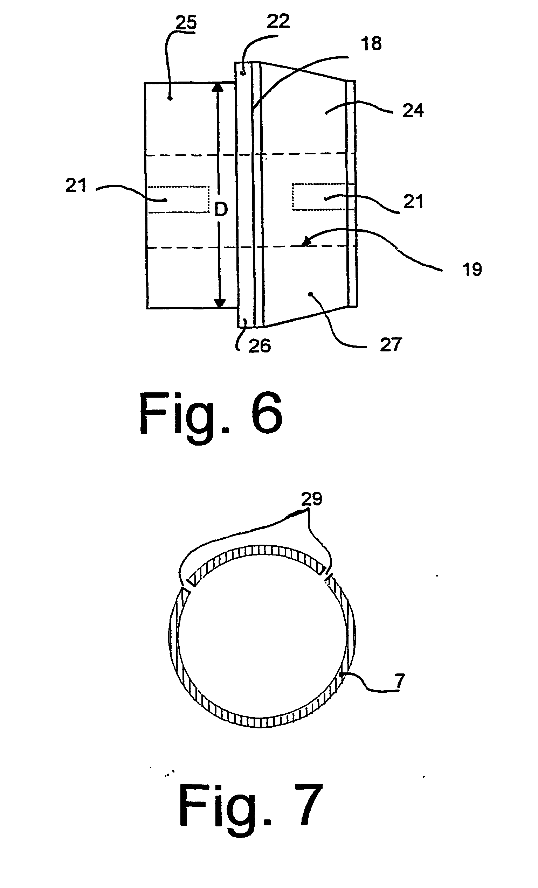

Der Widerlagerkörper 18 kann aber auch entsprechend der Fig. 6 ausgeführt sein. Er ist dabei in seiner axialen Erstreckung auf einem ersten Teil 25 zylindrisch mit einem dem Innendurchmesser des Rohres 7 angepassten Außendurchmesser D, auf einem zweiten Teil 26 mit dem zylindrischen Kragen 22 mit einem dem Außendurchmesser des Rohres angepassten Außendurchmesser und auf einem dritten Teil 27 mit einem Konus 24 versehen, dessen kleinster Durchmesser dem Rohrinnendurchmesser und dessen größter Durchmesser dem Rohraußendurchmesser angepasst ist. Der Widerlagerkörper 18 hat auf beiden Stirnseiten, also auch auf seiner zweiten Stirnseite 28 Ausformungen 21, die zum Eingriff eines Werkzeuges zur Verdrehsicherung während der Montage bestimmt sind. Auch bei diesem Widerlagerkörper 18 nach Fig. 6 ist die Gewindebohrung 19 des Widerlagerkörpers wie bei der des Widerlagerkörpers nach Fig. 3 exzentrisch angeordnet. In allen Ausführungsformen des Widerlagerkörpers 18 wird die Gewindestange 11 mit einer in Axialrichtung durchgehenden Bohrung umschlossen.

Wie die Fig. 7 erkennen lässt, ist das Rohr 7 im Bereich des freien Endes 16 der Gewindestange 11, d.h. auf der der Dübelspitze 8 abgewandten Seite mit zwei mantellinienparallelen, unsymmetrisch über den Umfang des Rohres 7 verteilt angeordneten Schlitzen 29 versehen. Es ist aber auch möglich, das einteilige Rohr auf der der Dübelspitze 8 abgewandten Seite mit mehreren nur etwa über den halben Umfang des Rohres verteilten Schlitzen auszustatten. Die Schlitze 29 begünstigen im Zusammenhang mit der exzentrisch angeordneten Gewindebohrung 19 während der Montage eine bevorzugte Ausweitung des Rohrmantels zwischen den Schlitzen 29, die sich bei horizontal verlaufender Dübelachse bevorzugt an die in vertikaler Richtung obere Randbegrenzung des Bohrloches 6 während der Aufweitung anlegen und den Dübelkörper 7a im Bohrloch so justieren, dass sich der Dübelkörper in der Betonplatte 3 in vertikaler Richtung an die untere Bohrlochwandung aufsetzt. Damit ist der Schwerlastdübel 1 in der Lage, spielfrei Querkräfte in Schwerkraftrichtung aufzunehmen.

Wie die Fig. 8 als Schnitt durch das Rohr 7 im Bereich der Dübelspitze 8 zeigt, ist das Rohr 7 mit mindestens drei, die Aufweitung begünstigenden mantellinienparallelen und regelmäßig über den Umfang des Rohres 7 verteilt angeordneten Schlitzen 30 versehen, die während der Montage die Aufweitung der Dübelspitze 8 begünstigen und eine Hinterschnittverankerung im Bohrloch 6 bewirken. Für manche Anwendungsfälle hat es sich als günstig erwiesen, wenn das einteilige Rohr mantelaußenseitig zumindest teilweise mit einer aufgerauten Oberfläche versehen ist. In allen Fällen besteht das Rohr 7, der Spreizkörper 12, der Widerlagerkörper 18 und die Gewindestange 11 aus einem korrosionsbeständigen Material, insbesondere aus einem nicht rostenden hochfesten Stahl, z.B. Chrom-Nickel-Stahl.

Die Schlitze 29,30 haben eine etwa der zweifachen axialen Erstreckung des Widerlager- bzw. Spreizkörpers 12,18 entsprechende Länge.

### Bezugszeichenliste

- 1: Schwerlastdübel
- 2: Wandsystem
- 3: Betonplatte
- 4: Wärmedämmschicht
- 5: Fassadenplatte
- 6: Bohrloch
- 7: einteiliges Rohr
- 7a: Dübelkörper
- 8: Dübelspitze
- 9: Oberfläche
- 10: Winkelstück
- 11: Gewindestange
- 12: Spreizkörper
- 13: Ende
- 14: Rechtsgewinde
- 15: Gewindeloch
- 16: freies Ende
- 17: Linksgewinde
- 18: Widerlagerkörper
- 19: Gewindebohrung
- 20: Stirnseite
- 21: Ausformungen
- 22: Kragen
- 23: Wandstärke
- 24: Konus
- 25: erstes Teil
- 26: zweites Teil
- 27: drittes Teil
- 28: zweite Stirnseite
- 29: Schlitze
- 30: Schlitze
- D: Außendurchmesser
- R: Pfeilrichtung

## Patentansprüche

1. Schwerlastdübel (1) mit einem hülsenförmigen, von einer Gewin destange (11) axial durchsetzten Dübelkörper (7a), mit einem im Bereich der Dübelspitze (8) stirnseitig angeordneten und den Dübelkörper (7a) aufweitenden, mit der Gewindestange (11) verbundenen Spreizkörper (12) und mit einem mit der Gewindestange verbundenen Widerlagerkörper (18), dem gegenüber der Spreizkörper (12) durch Verdrehen der Gewindestange (11) axial im Dübelkörper verschiebbar ist,
**dadurch gekennzeichnet, dass**
der Dübelkörper (7a) als einteiliges Rohr (7) ausgebildet ist und auf der der Dübelspitze (8) abgewandten Stirnseite den Widerlagerkörper (18) aufnimmt und dass der Widerlagerkörper (18) an seiner ersten äußeren Stirnseite (20) mit zum Eingriff eines Werkzeuges zur Verdrehsicherung während der Montage bestimmten Ausformungen (21) versehen ist.

2. Schwerlastdübel nach Anspruch 1,
**dadurch gekennzeichnet, dass**
die Ausformungen (21) von mindestens zwei im Abstand von der Gewindestange (11) im Widerlagerkörper (18) vorgesehenen Ausnehmungen gebildet sind.

3. Schwerlastdübel nach Anspruch 2,
**dadurch gekennzeichnet, dass**
die Ausnehmungen (21) von Sacklochbohrungen gebildet sind.

4. Schwerlastdübel nach Anspruch 1 oder einem der folgenden,
**dadurch gekennzeichnet, dass**
der Widerlagerkörper (18) rotationssymmetrisch ausgebildet und zumindest teilweise mit einem Außendurchmesser versehen ist, der dem Innendurchmesser des Rohres (7) entspricht.

5. Schwerlastdübel nach Anspruch 4,
**dadurch gekennzeichnet, dass**
sich an den Bereich des Außendurchmessers ein vorstehender, der Wandstärke (23 des Rohres (7) angepasster Kragen (22) anschließt.

6. Schwerlastdübel nach Anspruch 4,
**dadurch gekennzeichnet, dass**
sich an den Bereich des Außendurchmessers ein sich verjüngender Konus (24) anschließt.

7. Schwerlastdübel nach Anspruch 4,
**dadurch gekennzeichnet, dass**
der Widerlagerkörper (18) in seiner axialen Erstreckung auf einem ersten Teil (25) zylindrisch mit einem dem Innendurchmesser des Rohres (7) angepassten Außendurchmesser, auf einem zweiten Teil (26) mit einem zylindrischen Kragen (22) mit einem dem Außendurchmesser des Rohres (7) angepassten Außendurchmesser und auf einem dritten Teil (27) mit einem Konus (24) versehen ist, dessen kleinster Durchmesser dem Rohr-Innendurchmesser und dessen größter Durchmesser dem Rohr-Außendurchmesser angepasst ist.

8. Schwerlastdübel nach Anspruch 7,
**dadurch gekennzeichnet, dass**
der Widerlagerkörper (18) an seiner zweiten Stirnseite (28) mit zum Eingriff eines Werkzeuges zur Verdrehsicherung während der Montage bestimmten Ausformungen (21) versehen ist.

9. Schwerlastdübel nach einem der Ansprüche 5 bis 8,
**dadurch gekennzeichnet, dass**
der Widerlagerkörper (18) die Gewindestange (11) mit einer in Axialrichtung durchgehenden Bohrung (19) umschließt.

10. Schwerlastdübel nach Anspruch 9,
**dadurch gekennzeichnet, dass**
die Bohrung (19) zentrisch angeordnet ist.

11. Schwerlastdübel nach Anspruch 9,
**dadurch gekennzeichnet, dass**
die Bohrung (19) parallel zur Achse des Widerlagerkörpers (18) exzentrisch angeordnet ist.

12. Schwerlastdübel nach Anspruch 10 oder 11,
**dadurch gekennzeichnet, dass**
die Bohrung (19) eine Gewindebohrung ist, die mit dem Gewinde (17) der Gewindestange (11) korrespondiert.

13. Schwerlastdübel nach Anspruch 12,
**dadurch gekennzeichnet, dass**
das Gewinde ein Linksgewinde ist.

14. Schwerlastdübel nach Anspruch 1 oder einem der folgenden,
**dadurch gekennzeichnet, dass**
das einteilige Rohr (7)zumindest auf der der Dübelspitze (8) zugewandten Seite mit mindestens drei die Aufweitung begünstigenden mantellinienparallelen, regelmäßig über den Umfang des Rohres (7) verteilt angeordneten Schlitzen (30) versehen ist.

15. Schwerlastdübel nach Anspruch 1 oder einem der folgenden,
**dadurch gekennzeichnet, dass**
das einteilige Rohr (7) auf der der Dübelspitze (8) abgewandten Seite mit zwei mantellinienparallelen, unsymmetrisch über den Umfang des Rohres (7) verteilt angeordneten Schlitzen (29) versehen ist.

16. Schwerlastdübel nach Anspruch 1 oder einem der folgenden,
**dadurch gekennzeichnet, dass** dass das einteilige Rohr (7) auf der der Dübelspitze (8) abgewandten Seite mit mehreren nur etwa über den halben Umfang des Rohres verteilten Schlitzen ausgestattet ist.

17. Schwerlastdübel nach Anspruch 1 oder einem der folgenden,
**dadurch gekennzeichnet, dass**
dass die Gewindestange (11) mit zwei entgegengesetzt verlaufenden Gewinden (14,17)(Rechts-/Links-Gewinde) versehen ist, von denen eines je einer der Stirnseiten des einteiligen Rohres (7) zugeordnet ist.

18. Schwerlastdübel nach Anspruch 12,
**dadurch gekennzeichnet, dass**
die Gewindestange (11) am freien Ende (16) ihrer der Dübelspitze (8) abgewandten Seite mit zum Eingriff eines Werkzeuges zum drehmomentenschlüssigen Verdrehen während der Montage bestimmten Ausformungen ausgestattet ist.

19. Schwerlastdübel nach einem der Ansprüche 1 bis 18,
**dadurch gekennzeichnet, dass**
das einteilige Rohr (7) mantelaußenseitig zumindest teilweise mit einer aufgerauten Oberfläche versehen ist.

20. Schwerlastdübel nach einem der Ansprüche 1 bis 19,
**dadurch gekennzeichnet, dass**
das Rohr (7), der Spreizkörper (12), der Widerlagerkörper (18) und die Gewindestange (11) aus einem korrosionsbeständigen Material bestehen.

21. Schwerlastdübel nach Anspruch 20,
**dadurch gekennzeichnet, dass**
als korrosionsbeständiges Material ein nichtrostender, hochfester Stahl vorgesehen ist.

## Claims

1. A heavy-duty dowel with a sleeve-type dowel body, axially penetrated by a threaded rod, with an expansion body arranged on one end in the vicinity of the dowel point and expanding the dowel body, connected to the threaded rod and with an abutment body connected to the threaded rod, relative to which the expansion body can be displaced axially in the dowel body by rotation of the threaded rod,
**characterised in that**
the dowel body (7a) is embodied as a one-piece tube (7) and on the front side facing away from the dowel point (8) it receives the abutment body (18), and **in that** the abutment body (18) is provided on its first outer front side (20) with recesses (21) for engaging a tool to secure against twisting during assembly.

2. The heavy-duty dowel as claimed in Claim 1,
**characterised in that**
the recesses (21) are formed by at least two recesses provided at a distance from the threaded rod (11) in the abutment body (18).

3. The heavy-duty dowel as claimed in Claim 2,
**characterised in that**
the recesses are formed by sack hole bores.

4. The heavy-duty dowel as claimed in Claim 1 or any one of the following claims,
**characterised in that**
the abutment body (18) is designed rotationally symmetrical and is provided at least partially with an outer diameter, which corresponds to the inner diameter of the tube (7).

5. The heavy-duty dowel as claimed in Claim 4,
**characterised in that**
a protruding collar (22) adapted to the wall density (23) of the tube (7) is attached to the region of the outer diameter.

6. The heavy-duty dowel as claimed in Claim 4,
**characterised in that**
a tapering cone (24) is attached to the region of the outer diameter.

7. The heavy-duty dowel as claimed in Claim 4,
**characterised in that**
in its axial extension on a first part (25) the abutment body (18) is provided cylindrically with an outer diameter adapted to the inner diameter of the tube (7), on a second part (26) with a cylindrical collar (22) with an outer diameter adapted to the outer diameter of the tube (7) and on a third part (27) with a cone (24), whereof the smallest diameter matches the tube inner diameter and whereof the largest diameter matches the tube outer diameter.

8. The heavy-duty dowel as claimed in Claim 7,
**characterised in that**
the abutment body (18) is provided on its second front side (28) with recesses (21) specifically for engaging a tool to secure against twisting during assembly.

9. The heavy-duty dowel as claimed in any one of Claims 5 to 8,
**characterised in that**
the abutment body (18) encloses the threaded rod (11) with a bore hole (19) penetrating in an axial direction.

10. The heavy-duty dowel as claimed in Claim 9,
**characterised in that**
the borehole (19) is arranged centrically.

11. The heavy-duty dowel as claimed in Claim 9,
**characterised in that**
the borehole (19) is arranged eccentrically parallel to the axis of the abutment body (18).

12. The heavy-duty dowel as claimed in Claim 10 or 11,
**characterised in that**
the borehole (19) is a threaded bore hole, which corresponds to the thread (17) of the threaded rod (11).

13. The heavy-duty dowel as claimed in Claim 12,
**characterised in that**
the thread is a left-hand thread.

14. The heavy-duty dowel as claimed in Claim 1 or any one of the following claims,
**characterised in that**
the one-piece tube (7) is provided at least on the side facing the dowel point (8) with at least three slots (30) parallel to mantel lines, favouring expansion and arranged distributed regularly over the periphery of the tube (7).

15. The heavy-duty dowel as claimed in Claim 1 or any one of the following claims,
**characterised in that**
the one-piece tube (7) is provided on the side facing away from the dowel point (8) with two slots (29) parallel to mantel lines, arranged distributed asymmetrically over the periphery of the tube (7).

16. The heavy-duty dowel as claimed in Claim 1 or any one of the following claims,
**characterised in that**
the one-piece tube (7) is equipped on the side facing away from the dowel point (8) with several slots distributed only approximately over half the periphery of the tube.

17. The heavy-duty dowel as claimed in Claim 1 or any one of the following claims,
**characterised in that**
the threaded rod (11) is provided with two opposite-running threads (14,17) (right/left thread), whereof one is assigned to each of the front sides of the one-piece tube (7).

18. The heavy-duty dowel as claimed in Claim 12,
**characterised in that**
the threaded rod (11) is equipped at the free end (16) of its side facing away from the dowel point (8) with recesses specifically for engaging a tool for torque-conclusive twisting during assembly.

19. The heavy-duty dowel as claimed in any one of Claims 1 to 18,
**characterised in that**
the one-piece tube (7) is provided on the outer mantel side at least partially with a roughened surface.

20. The heavy-duty dowel as claimed in any one of Claims 1 to 19,
**characterised in that**
the tube (7), the expansion body (12), the abutment body (18) and the threaded rod (11) comprise a corrosion-resistant material.

21. The heavy-duty dowel as claimed in Claim 20,
**characterised in that**
stainless high-tensile steel is provided as corrosion-resistant material.

## Revendications

1. Cheville pour charge lourde (1) comprenant un corps de cheville (7a) en forme de manchon, traversé dans le sens axial par une tige filetée (11), comprenant un corps à expansion (12), relié à la tige filetée (11), disposé côté frontal dans la zone de la pointe de cheville (8) et élargissant le corps de cheville (7a), et comprenant un corps de butée (18) relié à la tige filetée (11), corps par rapport auquel le corps à expansion (12) peut être déplacé dans le sens axial dans le corps de cheville en amenant en rotation la tige filetée (11),
**caractérisée en ce que**
le corps de cheville (7a) est conçu comme un tube (7) en une seule pièce et reçoit la butée (18) sur le côté frontal opposé à la pointe de cheville (8) et **en ce que** le corps de butée (18) est pourvu sur son premier côté frontal (20) extérieur de déformations (21) définies pour se mettre en prise avec un outil destiné à bloquer la rotation pendant le montage.

2. Cheville pour charge lourde selon la revendication 1,
**caractérisée en ce que**
les déformations (21) sont formées par au moins deux évidements prévus à distance de la tige filetée (11) dans le corps de butée (18).

3. Cheville pour charge lourde selon la revendication 2,
**caractérisée en ce que**
les évidements (21) sont formés par des alésages à trou borgne.

4. Cheville pour charge lourde selon la revendication 1 ou selon l'une quelconque des revendications précédentes,
**caractérisée en ce que**
le corps de butée (18) est conçu à symétrie de révolution et est pourvu au moins en partie d'un diamètre extérieur qui correspond au diamètre intérieur du tube (7).

5. Cheville pour charge lourde selon la revendication 4,
**caractérisée en ce**
**qu'**un collet (22) en saillie, adapté à l'épaisseur de paroi (23) du tube (7), est raccordé à la zone du diamètre extérieur.

6. Cheville pour charge lourde selon la revendication 4,
**caractérisée en ce**
**qu'**un cône (24) se rétrécissant est raccordé à la zone du diamètre extérieur.

7. Cheville pour charge lourde selon la revendication 4,
**caractérisée en ce que**
le corps de butée (18) est pourvu dans son extension axiale sur une première partie (25) de manière cylindrique d'un diamètre extérieur adapté au diamètre intérieur du tube (7), sur une deuxième partie (26) d'un collet cylindrique (22) doté d'un diamètre extérieur adapté au diamètre extérieur du tube (7) et sur une troisième partie (27) d'un cône (24), dont le plus petit diamètre est adapté au diamètre intérieur du tube et dont le plus grand diamètre est adapté au diamètre extérieur du tube.

8. Cheville pour charge lourde selon la revendication 7,
**caractérisée en ce que**
le corps de butée (18) est pourvu sur son second côté frontal (28) de déformations (21) définies pour se mettre en prise avec un outil destiné à bloquer la rotation pendant le montage.

9. Cheville pour charge lourde selon l'une quelconque des revendications 5 à 8,
**caractérisée en ce que**
le corps de butée (18) entoure la tige filetée (11) avec un alésage (19) continu dans la direction axiale.

10. Cheville pour charge lourde selon la revendication 9,
**caractérisée en ce que**
l'alésage (19) est disposé de manière centrale.

11. Cheville pour charge lourde selon la revendication 9,
**caractérisée en ce que**
l'alésage (19) est disposé de façon excentrée parallèlement à l'axe du corps de butée (18).

12. Cheville pour charge lourde selon la revendication 10 ou 11,
**caractérisée en ce que**
l'alésage (19) est un alésage fileté, qui correspond au filet (17) de la tige filetée (11).

13. Cheville pour charge lourde selon la revendication 12,
**caractérisée en ce que**
le filet est un filet gauche.

14. Cheville pour charge lourde selon la revendication 1 ou selon l'une quelconque des revendications précédentes,
**caractérisée en ce que**
le tube (7) en une seule pièce est pourvu au moins sur le côté tourné vers la pointe de cheville (8) d'au moins trois fentes (30) parallèles à la génératrice, favorisant l'élargissement, disposées en étant réparties régulièrement sur la périphérie du tube (7).

15. Cheville pour charge lourde selon la revendication 1 ou selon l'une quelconque des revendications précédentes, **caractérisée en ce que** le tube (7) en une seule pièce est pourvu sur le côté opposé à la pointe de cheville (8) de deux fentes (29) parallèles à la génératrice, disposées en étant réparties de façon asymétrique sur la périphérie du tube (7).

16. Cheville pour charge lourde selon la revendication 1 ou selon l'une quelconque des revendications précédentes,
**caractérisée en ce que**
le tube (7) en une seule partie est équipé sur le côté opposé à la pointe de cheville (8) de plusieurs fentes réparties uniquement approximativement sur la moitié de la périphérie du tube.

17. Cheville pour charge lourde selon la revendication 1 ou selon l'une quelconque des revendications précédentes,
**caractérisée en ce que**
la tige filetée (11) est pourvue de deux filets (14, 17) (filets droit et gauche) s'étendant dans le sens opposé, dont l'un est associé respectivement à un des côtés frontaux du tube (7) en une seule pièce.

18. Cheville pour charge lourde selon la revendication 12,
**caractérisée en ce que**
la tige filetée (11) sur l'extrémité libre (16) de son côté opposé à la pointe de cheville (8) est équipée de déformations définies pour se mettre en prise avec un outil destiné à la rotation par clé dynamométrique pendant le montage.

19. Cheville pour charge lourde selon l'une quelconque des revendications 1 à 18,
**caractérisée en ce que**
le tube (7) en une seule pièce est pourvu côté extérieur du revêtement au moins en partie d'une surface rugueuse.

20. Cheville pour charge lourde selon l'une quelconque des revendications 1 à 19,
**caractérisée en ce que**
le tube (7), le corps à expansion (12), le corps de butée (18) et la tige filetée (11) sont constitués d'un matériau résistant à la corrosion.

21. Cheville pour charge lourde selon la revendication 20,
**caractérisée en ce**
**qu'**un acier antioxydant et à haute rigidité est prévu comme matériau résistant à la corrosion.
